# EUROPEAN PATENT APPLICATION

(11) **EP 4 745 543 A1**
(43) Date of publication of application: **20.05.2026**
(21) Application number: 24212776.9
(22) Date of filing: 13.11.2024
(51) Int. Cl.: G01K 1/08, G01K 1/14, G01K 13/02, G01D 11/24

(54) **VIBRATION-RESISTANT ASSEMBLY COMPRISING AN ELONGATED MEMBER SUCH AS A TEMPERATURE PROBE**

(71) Applicant: Hidria d.o.o., 5281 Spodnja Idrija (SI)
(72) Inventor: Lipu ek, Ana, 5214 Kal nad Kanalom (SI); Kenda, Miha, 5230 Bovec (SI); Mavri , Dejan, 5213 Kanal (SI)
(74) Representative: Ipsilon

(57) **Abstract**

Assembly (5) comprising:
- an elongated member (10) having a fixed end (12) and a free end (11) opposite the fixed end (12); and
- a retaining member (20) having a through hole (22), the fixed end (12) extending through the through hole (22), whereby the retaining member (20) is mounted onto the fixed end (12),
characterized in that
the through hole (22) of the retaining member (20) has a widened portion (24) which opens onto an end surface (26) of the retaining member (20), the end surface (26) facing towards the free end (11) of the elongated member (10), the widened portion (24) being defined at least in part by a peripheral wall (25),
the assembly (5) further comprises an extension member (30) sleeved on the elongated member (10) between the fixed end (12) and the free end (11).

## Description

The invention relates to an assembly comprising an elongated member and to a structure comprising such an assembly.

Structures comprising an assembly which comprises an elongated member appear in many contexts, such as where the elongated member includes a sensor or a heating element to be supplied with electricity.

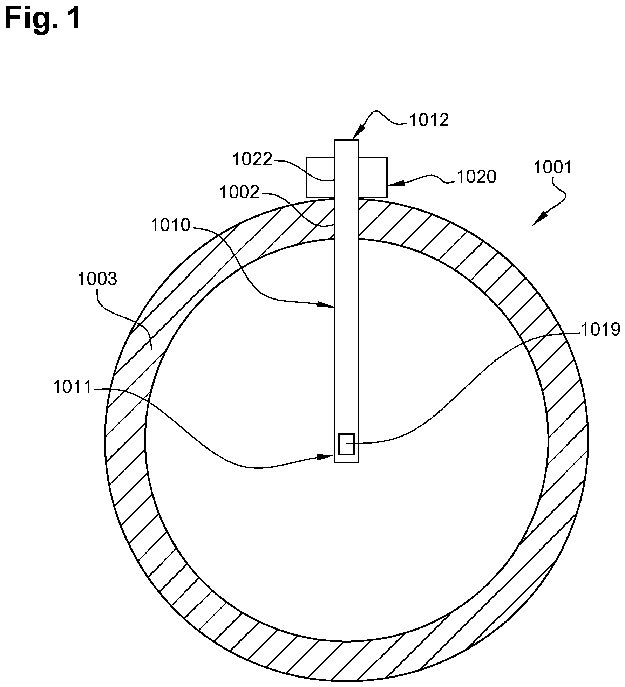

Figure 1 shows in cross-section an example of such a structure, generally designated by reference 1001. Figure 1 is highly schematic and not to scale. The structure 1001 is here in the form of a tube. The wall 1003 of the tube 1001 has a wall opening 1002 through which an elongated temperature probe 1010 extends. A first end 1011 of the temperature probe 1010 includes a temperature sensor 1019 for sensing temperature within the tube 1001.

A retaining member 1020, here in the form of a nut, has a through hole 1022 aligned with the wall opening 1002. A second end 1012 of the temperature probe 1010 opposite the first end 1011 extends through the through hole 1022, whereby the nut 1020 is mounted onto the second end 1012. By screwing the nut 1020, the second end 1012 is fixed to the tube 1001. In contrast, the first end 1011 is not fixed. Accordingly, the first end 1011 may be referred to as a free end and the second end 1012 may be referred to as a fixed end.

In one possible application, the tube 1001 forms part of an exhaust piping of a vehicle and the temperature sensor 1019 senses the temperature of exhaust gases flowing with the tube 1001. In this case, vibrations generated by the engine of the vehicle are transmitted to the tube 1001. These vibrations are in turn transmitted to the temperature probe 1010, and its free end 1011 oscillates as a result.

A problem arises when the natural frequency of the temperature probe 1010 falls within the frequency range of the vibrations transmitted to it. In this case, the vibrations cause resonance in the temperature probe 1010, which unacceptably decreases the lifetime of the temperature probe 1010.

Usually, this problem is addressed by means of soft materials, such as elastomers, to dampen the vibrations. However, such materials cannot be used at high operating temperatures. For instance, in the case of an exhaust piping of a vehicle, the exhaust gases may have a temperature above 500°C, and the resulting heating up of the tube 1001 makes it impossible to use a soft material to dampen the vibrations of the temperature probe 1010 for any useful time period.

Another solution would be to increase the stiffness of the temperature probe 1010. However, this may be undesirable, or even impractical due to dimensional or functional restrictions.

It should be noted that the above-mentioned considerations also apply to many structures other than tubes for exhaust piping of a vehicle and/or to many elongated members other than temperature probes.

Therefore, there is generally a need for an assembly comprising an elongated member having a free end and a fixed end opposite the free end, which can dampen vibrations even at high operating temperatures which prevent the use of soft materials such as elastomers, and without needing to increase the stiffness of the elongated member.

The invention aims to provide such an assembly.

Broadly, the invention relates to an assembly comprising:
- an elongated member having a fixed end and a free end opposite the fixed end; and
- a retaining member having a through hole, the fixed end extending through the through hole, whereby the retaining member is mounted onto the fixed end,
characterized in that
the through hole of the retaining member has a widened portion which opens onto an end surface of the retaining member, the end surface facing towards the free end of the elongated member, the widened portion being defined at least in part by a peripheral wall,
the assembly further comprises an extension member sleeved on the elongated member between the fixed end and the free end, the extension member having an end portion inserted into the widened portion.

The basic idea underlying the invention is to dampen vibrations by way of a friction contact between, on one hand, the end portion of the extension member and, on the other hand, the peripheral wall of the widened portion formed in the retaining member. In use, vibrations in the structure on which the retaining member is retained will be transmitted to the retaining member. However, the friction contact between the peripheral wall of the widened portion and the end portion will absorb some of the vibration energy. Accordingly, less vibration energy will be transmitted to the elongated member. In other words, the friction contact between the peripheral wall of the widened portion and the end portion allows for energy damping through friction. Thus, with the friction contact, the assembly can dampen vibrations even without using soft materials such as elastomers. Therefore, the assembly can dampen vibrations even at high operating temperatures which prevent the use of soft materials such as elastomers, and without needing to increase the stiffness of the elongated member.

The friction contact, which allows the assembly to dampen vibrations, is achieved by suitable dimensioning of both the end portion of the extension member and the peripheral wall of the widened portion formed in the retaining member.

A first variant of the invention involves a contact between cylindrical surfaces. According to this first variant,
the peripheral wall is cylindrical and the end portion has a cylindrical outer contour, whereby the end portion has an outer diameter A,
the peripheral wall and the end portion being dimensioned such that:
   - the outer diameter A verifies the relationship 1 mm < A ≤ 20 mm,
   - an insertion length B of the end portion verifies the relationship B ≥ 0.25 A,
   - a fit C between the end portion and the peripheral wall verifies the relationship -0.10 mm ≤ C ≤ +0.15 mm.

Experiments have shown that an assembly which verifies the above-mentioned relationships involving A, B and C exhibits improved lifetime in a vibration test.

This improvement in lifetime becomes more marked in the range -0.05 mm ≤ C ≤ +0.12 mm, which therefore is a preferred range according to the invention.

The improvement in lifetime becomes yet more marked in the range +0.01 mm ≤ C ≤ +0.05 mm, which therefore is a more preferred range according to the invention.

Preferably, the outer diameter A verifies the relationship 4 mm≤ A. Preferably, the outer diameter A verifies the relationship A ≤ 8 mm. More preferably, the outer diameter A verifies the relationship 4 mm ≤ A ≤ 8 mm.

A second variant of the invention involves a contact between frustoconical surfaces. According to this second variant,
the peripheral wall comprises a frustoconical wall with a cone angle DF and the end portion comprises a frustoconical portion with a cone angle CF,
the frustoconical wall and the frustoconical portion being dimensioned such that:
   - a greatest diameter AF of the frustoconical portion verifies the relationship 1 mm ≤ AF ≤ 20 mm,
   - an insertion length BF of the frustoconical portion verifies the relationship BF ≥ 0.25 AF,
   - the cone angle CF and the cone angle DF verify the relationship -10° ≤ DF - CF ≤ +10°.

When the assembly verifies the above-mentioned relationships involving AF, BF, CF and DF, an improvement in lifetime can be obtained, similarly to the first variant.

Preferably, the absolute value of the cone angle CF and/or the absolute value of the cone angle DF is no greater than 30°, in other words |CF| ≤ 30° and/or |DF| ≤ 30°.

Preferably, the greatest diameter AF verifies the relationship 4 mm≤ AF. Preferably, the greatest diameter AF verifies the relationship AF ≤ 8 mm. More preferably, the greatest diameter AF verifies the relationship 4 mm ≤ AF ≤ 8 mm.

The following preferred features apply equally to the first variant of the invention and the second variant of the invention.

In some preferred embodiments, the peripheral wall (or, in the second variant, at least the frustoconical wall) has a surface roughness Ra of at least 0.1 micrometers and at most 6.4 micrometers.

In some preferred embodiments, the end portion (or, in the second variant, at least the frustoconical portion) has a surface roughness Ra of at least 0.1 micrometers and at most 6.4 micrometers.

By setting values for the surface roughness Ra within these ranges, a greater improvement in lifetime can be achieved via the desired friction contact between the peripheral wall and the end portion.

In some preferred embodiments, the retaining member is made of a nickel alloy, stainless steel or a titanium alloy.

In some preferred embodiments, the extension member is made of a nickel alloy, stainless steel or a titanium alloy.

This choice of materials provides the assembly with further improved resistance to vibrations and to other stresses such as thermal stress.

In some preferred embodiments, the extension member is retained on the elongated member. Preferably in this case, the extension member is retained on the elongated member by crimping and/or tight fitting. Alternatively, the extension member is retained on the elongated member by at least one of friction welding, fusion welding, soldering or brazing.

In one particular embodiment, the elongated member has a hollow cross-section, whereby the elongated member has an inner volume.

In one particular embodiment, the inner volume is filled with an electrical insulator which surrounds at least one electrically conducting element.

In certain embodiments, the free end of the elongated member includes a sensor, for instance a temperature sensor, connected to the electrically conducting element.

In certain embodiments, the free end of the elongated member includes a heating element connected to the electrically conducting element.

In some preferred embodiments, the retaining member has a flange on which the end surface is formed, and at least part of the widened portion of the through hole is formed within the flange. Preferably, the entirety of the widened portion of the through hole is formed within the flange.

In some preferred embodiments, the assembly further comprises a fixing member for retaining the retaining member.

In some preferred embodiments, the fixing member has an inner opening in which part of the retaining member is housed. Preferably, the fixing member abuts the flange. Preferably, the inner opening is unthreaded.

In some preferred embodiments, the fixing member has an outer threading.

The invention extends to a structure comprising a wall and an assembly as described above, wherein the wall has a wall opening through which the elongated member extends, the retaining member of the assembly being retained on the wall.

In some preferred embodiments where the assembly comprises the above-mentioned fixing member, the fixing member of the assembly retains the retaining member within the wall opening.

In some preferred embodiments where the fixing member has the above-mentioned outer threading, the wall opening comprises an inner threading, and the outer threading of the fixing member engages the inner threading, whereby the fixing member retains the retaining member within the wall opening.

In some preferred embodiments where the retaining member has the above-mentioned flange, the wall opening further comprises a shoulder, and the outer threading of the fixing member engages the inner threading, whereby the fixing member retains the retaining member within the wall opening in a position in which the fixing member abuts the flange and the end surface formed on the flange abuts the shoulder.

Irrespective of the formal presentation that is provided, unless explicitly stated otherwise, the various features specified above or hereafter must not be considered to be closely or inextricably linked to each other, the invention can relate to only one of these structural or functional features, or to only some of these structural or functional features, or to only part of one of these structural or functional features, or even to any group, combination or juxtaposition of all or some of these structural or functional features.

Further aims, features and advantages of the invention will become apparent upon reading the following description, which is provided by way of a nonlimiting example of some of its possible embodiments, and with reference to the accompanying drawings, in which:
- figure 1 is a schematic sectional view of an assembly comprising an elongated member, according to the prior art;
- figure 2 is a schematic sectional view of an assembly comprising an elongated member, according to the invention;
- figure 3 is a side view of one specific implementation of a first variant of the invention, in which the elongated member is a temperature probe;
- figure 4 is a sectional view along line IV-IV on figure 3;
- figure 5 is an enlargement of the left-hand part of figure 4;
- figure 6 is an enlargement of the center part of figure 5;
- figure 7 is an enlargement of detail VII on figure 6;
- figure 8 is a partial sectional view of the elongated member;
- figure 9 shows a conceptual graph showing the expected lifetime of the assembly as a function of the fit shown on figure 7;
- figure 10 shows a graph of test results involving constructed examples of the assembly shown on figures 3 to 8; and;
- figure 11 is a partial sectional view of an assembly according to a second variant of the invention.

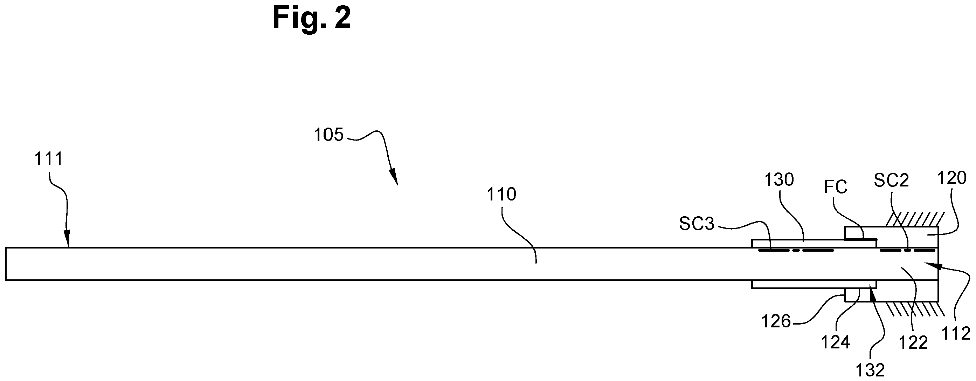

First, the basic concept of the invention will be described with reference to figure 2, which shows an assembly 105 according to the invention. Figure 2 is highly schematic and not to scale. The assembly 105 comprises an elongated member 110 and a retaining member 120. The elongated member 110 has a free end 111 and a fixed end 112 opposite the free end 111. The retaining member 120 has a through hole 122. The fixed end 112 extends through the through hole 122, whereby the retaining member 120 is mounted onto the fixed end 112. As shown schematically on the right-hand part of figure 2, the retaining member 120 is retained on a structure not shown on figure 2, for instance on a wall of this structure. Accordingly, the retaining member 120 retains the elongated member 110 on the structure by its fixed end 112, whereas the free end 111 is not fixed.

According to the invention, the assembly 105 further comprises an extension member 130. The extension member 130 is sleeved on the elongated member 110 between the fixed end 112 and the free end 111. Further, the through hole 122 has a widened portion 124. In other words, the widened portion 124 has a larger cross-section than the rest of the through hole 122. The widened portion 124 opens onto an end surface 126 of the retaining member 120, this end surface 126 facing towards the free end 111. An end portion 132 of the extension member 130 is inserted into (e.g. pressed into) the widened portion 124 such that a friction contact exists between a peripheral wall of the widened portion 124 and the end portion 132. The peripheral wall is not referenced on figure 2; however, the friction contact is denoted by the thick line FC on figure 2. Meanwhile, since the extension member 130 is sleeved on the elongated member 110, a surface contact exists between the extension member 130 and the elongated member 110; and since the retaining member 120 is mounted onto the fixed end 112, a surface contact exists between the retaining member 120 and the fixed end 112. These surface contacts are respectively denoted by the mixed lines SC3 and SC2 on figure 2.

In use, vibrations in the structure on which the retaining member 120 is retained will be transmitted to the retaining member 120. However, the friction contact FC between the peripheral wall of the widened portion 124 and the end portion 132 will absorb some of the vibration energy. Accordingly, less vibration energy will be transmitted to the elongated member 110. In other words, the friction contact FC between the peripheral wall of the widened portion 124 and the end portion 132 allows for energy damping through friction. Thus, with the friction contact FC, the assembly 105 can dampen vibrations even without using soft materials such as elastomers. Therefore, the assembly 105 can dampen vibrations even at high operating temperatures which prevent the use of soft materials such as elastomers, and without needing to increase the stiffness of the elongated member 110.

The assembly 105 can be used with a wide variety of elongated members 110 and therefore in a wide variety of applications. In one example, the elongated member 110 is a sensor probe (e.g. a temperature probe) which includes a sensor (e.g. a temperature sensor), for instance in its free end 111. In another example, the elongated member 110 is an electric heater, for instance a glow plug, which includes a heating element, for instance in its free end 111. In either of these examples, the elongated member 110 has a hollow cross-section, whereby the elongated member 110 has an inner volume, and the inner volume is filled with an electrical insulator which surrounds at least one electrically conducting element connected to the sensor (e.g. temperature sensor) or to the heating element.

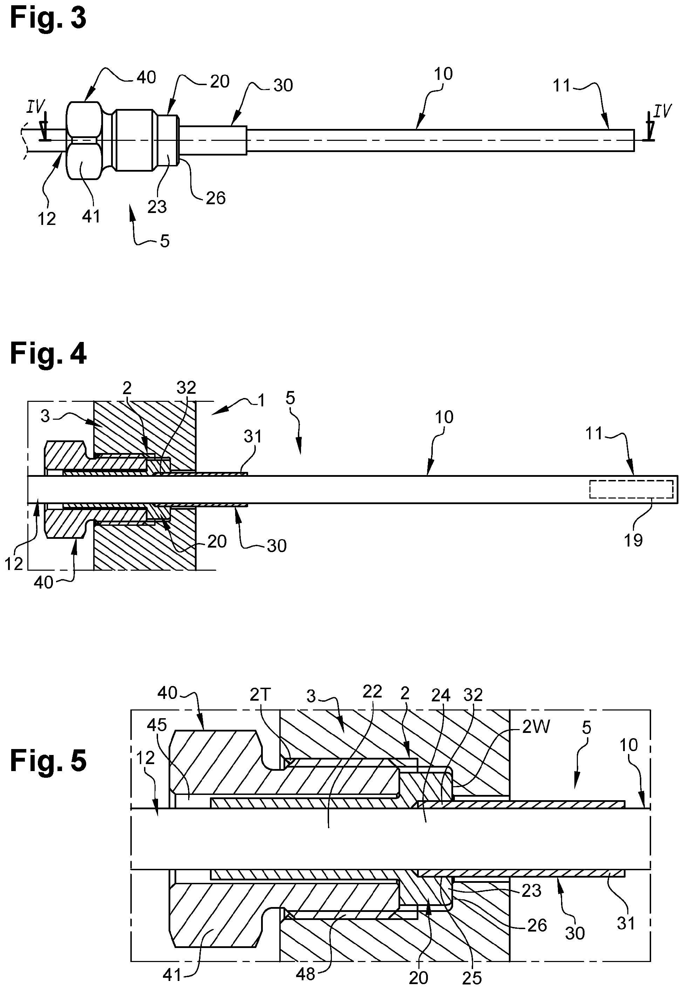

One specific implementation of a first variant of the invention will now be described with reference to figures 3 to 8, which show another assembly 5 according to the invention.

Referring to figure 3, similarly to the assembly 105, the assembly 5 comprises an elongated member 10, here in the form of a temperature probe, a retaining member 20, and an extension member 30.

The temperature probe 10 has a free end 11 and a fixed end 12 opposite the free end 11. The free end 11 includes a temperature sensor 19, whose approximate position is shown schematically by the dashed lines on figure 4.

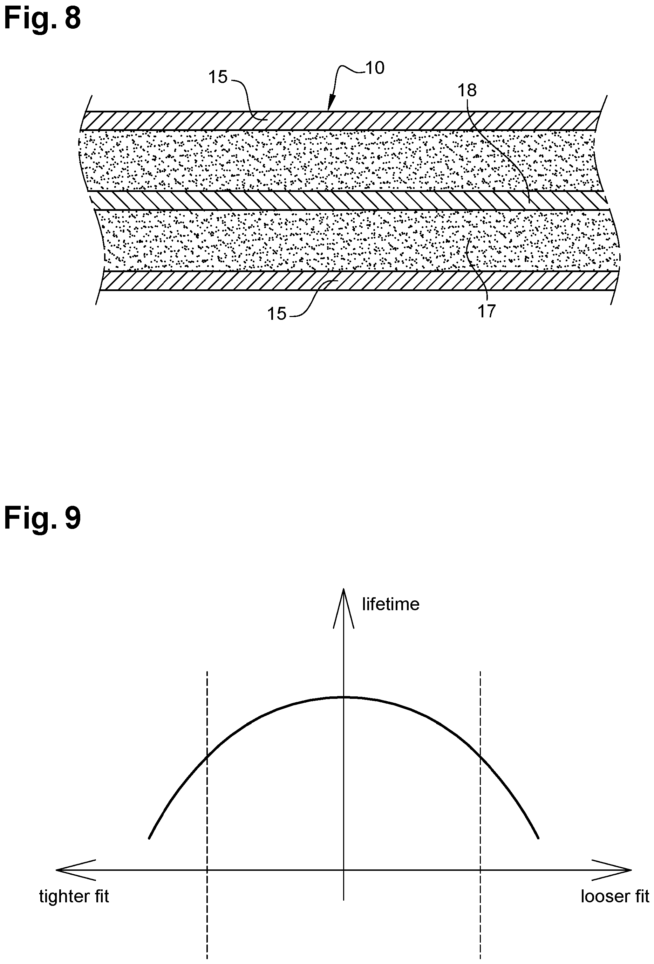

Referring to figure 8, the temperature probe 10 has a hollow cross-section defined by an outer wall 15, whereby the temperature probe 10 has an inner volume surrounded by the outer wall 15. The inner volume is filled with an electrical insulator 17 which surrounds an electrically conducting element 18 connected to the temperature sensor 19. The temperature sensor 19 is not shown on figure 8. The connection of the temperature sensor 19 to an external device, such as an electronic control unit (ECU), is not shown on the drawings.

Figure 4 is a sectional view along line IV-IV on figure 3 and shows the assembly 5 installed in a wall 3 of a structure 1. The term "structure" encompasses any construction having a wall 3 in which the assembly 5 could be installed, such as for example a tube or a housing. It should therefore be noted that the wall 3 may not be planar or may not be planar outside the portion of the wall 3 shown on the drawings. The wall 3 has a wall opening 2 through which the temperature probe 10 extends.

Figure 5 is an enlargement of the left-hand part of figure 4 and therefore shows in greater detail the wall opening 2, the retaining member 20 and the extension member 30. Similarly to the assembly 105, the retaining member 20 has a through hole 22. The fixed end 12 extends through the through hole 22, whereby the retaining member 20 is mounted onto the fixed end 12. The retaining member 20 is retained on the wall 3 and thus retains the temperature probe 10 on the wall 3 by its fixed end 12, whereas the free end 11 is not fixed. Further, a surface contact exists between the retaining member 20 and the fixed end 12.

Similarly to the assembly 105, the extension member 30 is sleeved on the temperature probe 10 between the fixed end 12 and the free end 11. Therefore, a surface contact exists between the extension member 30 and the temperature probe 10. Preferably, the extension member 30 is retained on the temperature probe 10 to ensure this surface contact.

Note that the expression "surface contact" denotes the absence of clearance but does not necessarily imply any adhesion due to e.g. glue or any joining due to e.g. brazing, soldering or welding. In fact, to the contrary, it is specifically preferred that both the extension member 30 and the retaining member 20 are not adhered or joined to the temperature probe 10. In this case, the extension member 30 may be retained on the temperature probe 10 by crimping and/or tight fitting, preferably at the end portion 31 (see figure 4) of the extension member 30 which is opposite the end portion 32. However, if desired, the extension member 30 may be retained on the temperature probe 10 by at least one of friction welding, fusion welding, soldering or brazing.

The through hole 22 has a widened portion 24. In other words, the widened portion 24 has a larger cross-section than the rest of the through hole 22. The widened portion 24 opens onto an end surface 26 of the retaining member 20, this end surface 26 facing towards the free end 11. An end portion 32 of the extension member 30 is inserted into the widened portion 24.

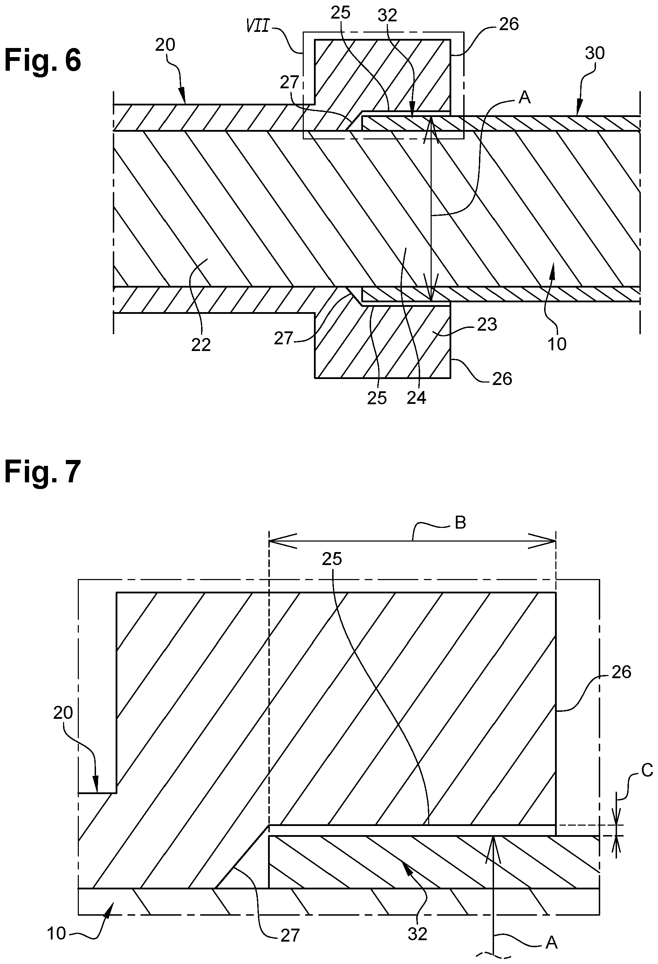

In the example shown, as best seen on figures 5 and 6, the widened portion 24 is formed entirely within a flange 23 of the retaining member 20, the end surface 26 being formed on this flange 23. Alternatively, only a part of the widened portion 24 may be formed within the flange 23.

Returning now to figure 5, the assembly 5 further comprises a fixing member 40. The fixing member 40 has an inner opening 45 in which part of the retaining member 20 is housed, here the entire retaining member 20 except the flange 23. Of course, the free end 12 of the temperature probe 10 also extends through the inner opening 45.

Preferably, the inner opening 45 is unthreaded, i.e. the inner opening 45 lacks any inner threading. Indeed, such an inner threading might interfere when the fixing member 40 is being inserted in the wall opening 2 around the retaining member 20.

In the example shown, the fixing member 40 is in the form of a threaded bushing and therefore has a head 41 (for instance hexagonal) and an outer threading 48. As best seen on figure 5, the wall opening 2 comprises an inner threading 2T which engages the outer threading 48 as the fixing member 40 is being screwed in the wall opening 2. Further, the fixing member 40 is screwed in the wall opening 2 until the fixing member 40 abuts the flange 23, causing the end surface 26 of the flange 23 to abut a shoulder 2W formed in the wall opening 2. Thereby, the retaining member 20 is securely maintained in the wall opening 2.

Alternatively, the fixing member 40 may be constructed in other ways provided it retains the retaining member 20 within the wall opening 2. In such cases, however, it remains preferable that the fixing member 40 abuts the flange 23 and the end surface 26 of the flange 23 abuts the shoulder 2W.

In alternative embodiments not shown on the drawings, the retaining member 20 may be a nut or a spacer having the through hole 22 and the widened portion 24. In this case, the retaining member 20 lacks the flange 23, and the retaining member 20 is not necessarily housed in the inner opening 45. However, it remains preferable that the fixing member 40 abuts the retaining member 20 and the end surface 26 of the retaining member 20 abuts the shoulder 2W.

Similarly to the assembly 105, the assembly 5 is designed such that a friction contact exists between a peripheral wall 25 of the widened portion 24 and the end portion 32. As a result, and similarly to what has been explained above referring to figure 2, the friction contact between the peripheral wall 25 and the end portion 32 allows for energy damping through friction. The explanation given above for the assembly 105 is therefore not repeated for the assembly 5.

The friction contact between the peripheral wall 25 and the end portion 32 will now be explained in more detail referring to figures 6 and 7.

The peripheral wall 25 is cylindrical. A shoulder 27 (see figure 6) is therefore formed at the bottom of the widened portion 24. Correspondingly, an outer contour of the end portion 32 of the extension member 30 is cylindrical. The end portion 32 therefore has an outer diameter A (see figures 6 and 7), this outer diameter A being the diameter of the cylindrical outer contour of the end portion 32.

In addition to the outer diameter A, the dimensioning of the assembly 5 considers an insertion length B (see figure 7) of the end portion 32. This insertion length B is measured in a direction parallel to the longitudinal axis of the cylindrical peripheral wall 25. A larger insertion length B means that more of the end portion 32 is inserted into the widened portion 24.

The dimensioning of the assembly 5 further considers a fit C (see figure 7) between the end portion 32 and the peripheral wall 25. This fit C is measured in a direction perpendicular to the longitudinal axis of the cylindrical peripheral wall 25. The value of the fit C can be positive or negative. A positive value of the fit C means that the peripheral wall 25 is larger than the end portion 32. This case is illustrated on figure 7. (Note that the fit C has been exaggerated on figure 7 to ensure clarity of the drawing.) On the contrary, a negative value of the fit C means that the peripheral wall 25 is smaller than the end portion 32, and therefore some amount of force is required to press the end portion 32 into the widened portion 24.

Figure 9 shows a conceptual graph showing the expected lifetime of the assembly 5 as a function of C. If C is too negative, i.e. if the fit between the end portion 32 and the peripheral wall 25 is too tight, the assembly 5 is expected to respond to vibrations as if the extension member 30 and the retaining member 20 were one solid part. Therefore, the lifetime of the assembly 5 is expected to be low, as shown on the left-hand part of figure 9. On the other hand, if C is too positive, i.e. if the fit between the end portion 32 and the peripheral wall 25 is too loose, the assembly 5 is expected to respond to vibrations as if the extension member 30 were not present. Therefore, the lifetime of the assembly 5 is also expected to be low, as shown on the right-hand part of figure 9. Meanwhile, if C is neither too negative nor too positive, i.e. if the fit between the end portion 32 and the peripheral wall 25 is neither too tight nor too loose, the desired friction contact between the peripheral wall 25 and the end portion 32 is achieved and allows for energy damping through friction as mentioned above.

Therefore, in the assembly 5, the fit C verifies the relationship 0.10 mm ≤ C ≤ +0.15 mm while the outer diameter A verifies the relationship 1 mm ≤ A ≤ 20 mm.

Further, to provide a sufficient contact area between the peripheral wall 25 and the end portion 32, the insertion length B verifies the relationship B ≥ 0.25 A.

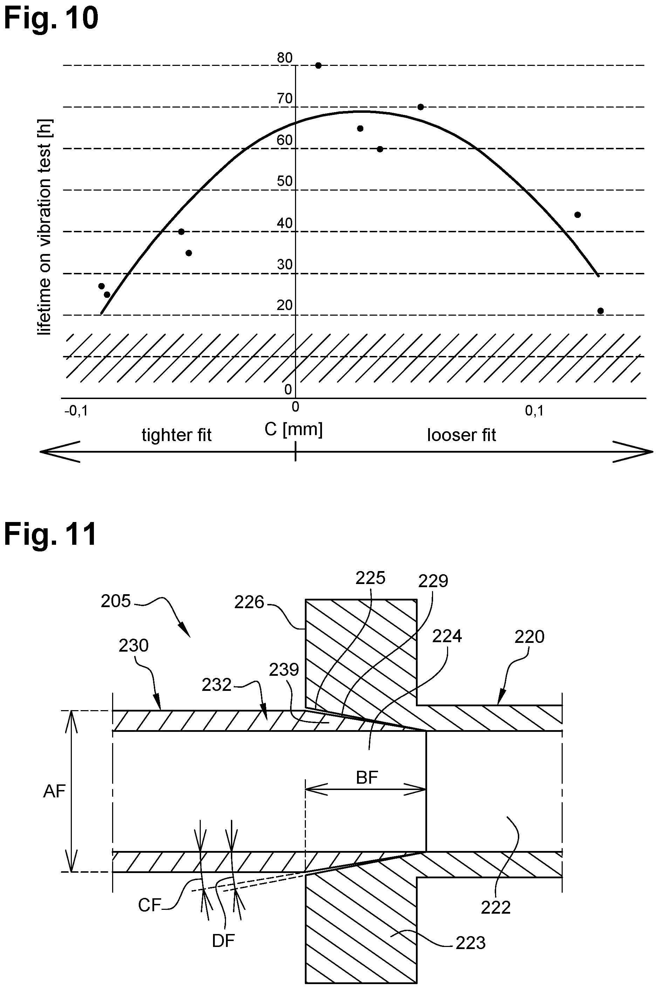

Figure 10 shows a graph of test results involving ten constructed examples of the assembly 5 which verify the above-mentioned relationships involving A, B and C. The constructed examples were identical except for the value of C. The horizontal axis on the graph indicates the value of C for each constructed example. Then, each constructed example was subjected to a vibration test under identical test conditions. The vertical axis on the graph indicates the lifetime of the temperature probe 10 on the vibration test, in other words the amount of time until the temperature probe 10 failed.

On figure 10, each point denotes a test result, and the thick continuous curve on figure 10 is a fitting curve of the test results. For comparison purposes, the hatched area on the bottom of the graph shows the lifetime (no more than 15 hours and even as little as 5 hours) which is achievable with an assembly 5 which does not verify the above-mentioned relationships involving A, B and C.

From figure 10, it will be understood that an assembly 5 which verifies the above-mentioned relationships involving A, B and C exhibits improved lifetime of the temperature probe 10 (at least 20 hours compared to 15 hours or less).

This improvement in lifetime becomes more marked (at least 35 hours compared to 15 hours or less) in the range -0.05 mm ≤ C ≤ +0.12 mm, which therefore is a preferred range according to the invention.

The improvement in lifetime becomes yet more marked (at least 60 hours compared to 15 hours or less) in the range +0.01 mm ≤ C ≤ +0.05 mm, which therefore is a more preferred range according to the invention.

Preferably, the outer diameter A verifies the relationship 4 mm≤ A. Preferably, the outer diameter A verifies the relationship A ≤ 8 mm. More preferably, the outer diameter A verifies the relationship 4 mm ≤ A ≤ 8 mm.

Preferably, the peripheral wall 25 has a surface roughness Ra of at least 0.1 micrometers and at most 6.4 micrometers, and/or the end portion 32 has a surface roughness Ra of at least 0.1 micrometers and at most 6.4 micrometers. By setting values for the surface roughness Ra within these ranges, a greater improvement in lifetime can be achieved via the desired friction contact between the peripheral wall 25 and the end portion 32. Although not required, the peripheral wall 25 and the end portion 32 may have equal values of the surface roughness Ra.

The retaining member 20 is preferably made of nickel alloy, stainless steel or a titanium alloy. Independently from the choice of material for the retaining member 20, the extension member 30 is preferably made of nickel alloy, stainless steel or a titanium alloy. This choice of materials provides the assembly 5 with further improved resistance to vibrations and to other stresses such as thermal stress. Although not required, the retaining member 20 and the extension member 30 may be made of the same alloy.

As an alternative to the cylindrical peripheral wall 25 and to the end portion 32 having a cylindrical outer contour, a frustoconical peripheral wall and an end portion having a frustoconical outer contour may be used. Figure 11 shows an assembly 205 which implements this alternative in a second variant of the invention. On figure 11, elements which are identical to or similar to elements of the assembly 5 have the same reference numbers increased by 200 and are not described again except where necessary.

It should be noted that even though the temperature probe 10 is not shown on figure 11 for clarity of the drawing, the retaining member 220 is mounted onto the fixed end 12, and the extension member 230 is sleeved on the temperature probe 10 between the free end 11 and the fixed end 12.

The assembly 205 differs from the assembly 5 by the geometries of the widened portion 224 and the end portion 232. Specifically, the peripheral wall 225 of the widened portion 224 comprises a frustoconical wall 229, and the end portion 232 comprises a frustoconical portion 239.

The greatest diameter of the frustoconical portion 239 is denoted by AF.

In addition to the greatest diameter AF, the dimensioning of the assembly 205 considers an insertion length BF of the frustoconical portion 239. This insertion length BF is measured in a direction parallel to the longitudinal axis of the frustoconical wall 229. A larger insertion length BF means that more of the frustoconical portion 239 is inserted into the widened portion 224.

The dimensioning of the assembly 205 further considers the cone angle DF of the frustoconical wall 229 and the cone angle CF of the frustoconical portion 239.

Analogously to the assembly 5, the assembly 205 is dimensioned so that the fit between the frustoconical portion 239 and the frustoconical wall 229 is neither too tight nor too loose. Therefore, in the assembly 205, the cone angle CF and the cone angle DF verify the relationship -10° ≤ DF - CF ≤ +10°while the greatest diameter AF verifies the relationship 1 mm ≤ AF ≤ 20 mm. Further, to provide a sufficient contact area between the frustoconical wall 229 and the frustoconical portion 239, the insertion length BF verifies the relationship BF ≥ 0.25 AF.

When the assembly 205 verifies the above-mentioned relationships involving AF, BF, CF and DF, an improvement in lifetime of the temperature probe 10 can be obtained.

Preferably, the absolute value of the cone angle CF and/or the absolute value of the cone angle DF is no greater than 30°, in other words |CF| ≤ 30° and/or |DF| ≤ 30°.

Preferably, the greatest diameter AF verifies the relationship 4 mm≤ AF. Preferably, the greatest diameter AF verifies the relationship AF ≤ 8 mm. More preferably, the greatest diameter AF verifies the relationship 4 mm ≤ AF ≤ 8 mm.

In the example shown on figure 11, the peripheral wall 225 consists of the frustoconical wall 229, in other words the entire peripheral wall 225 is frustoconical. However, the second variant of the invention is not limited to this. Specifically, the peripheral wall 225 may comprise a cylindrical wall in addition to the frustoconical wall 229. In this case, a cylindrical portion of the end portion 232 which is adjacent to the frustoconical portion 229 is inserted into the widened portion 224 as well. Possibly, the cylindrical wall forming part of the peripheral wall 225 and the cylindrical portion of the end portion 232 are dimensioned as in the first variant of the invention.

Although the assemblies 5, 205 have been described as comprising an elongated member 10 in the form of a temperature probe, the invention is not limited to this. More generally, the elongated member 10 may be a sensor probe whose free end 11 includes a sensor 19. In another example, the elongated member 10 is an electric heater, for instance a glow plug, which includes a heating element, for instance in its free end 11.

The invention can be the subject of numerous variations and applications other than those described above. In particular, it is obvious that, unless otherwise specified, the various structural and functional features of each of the aforementioned embodiments must not be considered to be combined and/or closely and/or inextricably linked to one another, but, on the contrary, must be considered to be simple juxtapositions. Furthermore, the structural and/or functional features of the various embodiments described above can be the subject, in whole or in part, of any different juxtaposition or of any different combination.

## Claims

1. - Assembly (5) comprising:
- an elongated member (10) having a fixed end (12) and a free end (11) opposite the fixed end (12); and
- a retaining member (20) having a through hole (22), the fixed end (12) extending through the through hole (22), whereby the retaining member (20) is mounted onto the fixed end (12),
**characterized in that**
the through hole (22) of the retaining member (20) has a widened portion (24) which opens onto an end surface (26) of the retaining member (20), the end surface (26) facing towards the free end (11) of the elongated member (10), the widened portion (24) being defined at least in part by a peripheral wall (25),
the assembly (5) further comprises an extension member (30) sleeved on the elongated member (10) between the fixed end (12) and the free end (11), the extension member (30) having an end portion (32) inserted into the widened portion (24),
the peripheral wall (25) is cylindrical and the end portion (32) has a cylindrical outer contour, whereby the end portion (32) has an outer diameter A,
the peripheral wall (25) and the end portion (32) being dimensioned such that:
- the outer diameter A verifies the relationship 1 mm ≤ A ≤ 20 mm,
- an insertion length B of the end portion (32) verifies the relationship B ≥ 0.25 A,
- a fit C between the end portion (32) and the peripheral wall (25) verifies the relationship
- 0.10 mm ≤ C ≤ +0.15 mm.

2. - Assembly (205) comprising:
- an elongated member (10) having a fixed end (12) and a free end (11) opposite the fixed end (12); and
- a retaining member (220) having a through hole (222), the fixed end (12) extending through the through hole (222), whereby the retaining member (220) is mounted onto the fixed end (12),
**characterized in that**
the through hole (222) of the retaining member (220) has a widened portion (224) which opens onto an end surface (226) of the retaining member (220), the end surface (226) facing towards the free end (11) of the elongated member (10), the widened portion (224) being defined at least in part by a peripheral wall (225),
the assembly (205) further comprises an extension member (230) sleeved on the elongated member (10) between the fixed end (12) and the free end (11), the extension member (230) having an end portion (232) inserted into the widened portion (224), the peripheral wall (225) comprises a frustoconical wall (229) with a cone angle DF and the end portion (232) comprises a frustoconical portion (239) with a cone angle CF, the frustoconical wall (229) and the frustoconical portion (239) being dimensioned such that:
- a greatest diameter AF of the frustoconical portion (239) verifies the relationship 1 mm ≤ AF ≤ 20 mm,
- an insertion length BF of the frustoconical portion (239) verifies the relationship BF ≥ 0.25 AF,
- the cone angle CF and the cone angle DF verify the relationship -10° ≤ DF - CF ≤ +10°.

3. - Assembly (5, 205) according to any one of claims 1 to 2, wherein the peripheral wall (25, 225) has a surface roughness Ra of at least 0.1 micrometers and at most 6.4 micrometers.

4. - Assembly (5, 205) according to any one of claims 1 to 3, wherein the end portion (32, 232) has a surface roughness Ra of at least 0.1 micrometers and at most 6.4 micrometers.

5. - Assembly (5, 205) according to any one of claims 1 to 4, wherein the retaining member (20, 220) is made of a nickel alloy, stainless steel or a titanium alloy.

6. - Assembly (5, 205) according to any one of claims 1 to 5, wherein the extension member (30, 230) is made of a nickel alloy, stainless steel or a titanium alloy.

7. - Assembly (5, 205) according to any one of claims 1 to 6, wherein the extension member (30, 230) is retained on the elongated member (10), optionally by at least one of crimping, tight fitting, friction welding, fusion welding, soldering or brazing.

8. - Assembly (5, 205) according to any one of claims 1 to 7, wherein the elongated member (10) has a hollow cross-section, whereby the elongated member (10) has an inner volume, and wherein the inner volume is filled with an electrical insulator (17) which surrounds at least one electrically conducting element (18).

9. - Assembly (5, 205) according to claim 8, wherein the free end (11) of the elongated member (10) includes a sensor, for instance a temperature sensor (19), connected to the electrically conducting element (18).

10. - Assembly (5, 205) according to any one of claims 8 to 9, wherein the free end (11) of the elongated member (10) includes a heating element connected to the electrically conducting element (18).

11. - Assembly (5, 205) according to any one of claims 1 to 10, wherein the retaining member (20, 220) has a flange (23, 223) on which the end surface (26, 226) is formed, and wherein at least part of the widened portion (24, 224) of the through hole (20, 220) is formed within the flange (23, 223).

12. - Assembly (5, 205) according to any one of claims 1 to 11, wherein the assembly (5, 205) further comprises a fixing member (40) for retaining the retaining member (20, 220).

13. - Assembly (5, 205) according to claim 12, wherein the fixing member has an inner opening (45) in which part of the retaining member (20, 220) is housed, preferably wherein the inner opening (45) is unthreaded.

14. - Structure (1) comprising a wall (3) and an assembly (5, 205) according to any one of claims 1 to 13, wherein the wall (3) has a wall opening (2) through which the elongated member (10) extends, the retaining member (20, 220) of the assembly (5) being retained on the wall (3).

15. - Structure (1) according to claim 14, wherein the assembly (5, 205) is according to any one of claims 12 to 13 and the fixing member (40) of the assembly (5, 205) retains the retaining member (20, 220) within the wall opening (2).
